# EUROPEAN PATENT APPLICATION

(11) **EP 1 835 375 A1**
(43) Date of publication of application: **19.09.2007**
(21) Application number: 05816941.8
(22) Date of filing: 19.12.2005
(51) Int. Cl.: G06D 3/00

(54) **RENTAL MANAGEMENT SYSTEM**

(30) Priority: 24.12.2004 JP 2004373231
(71) Applicant: Hitachi Construction Machinery Co., Ltd, Tokyo 112-0004 (JP)
(72) Inventor: EGUCHI, Yoshinori, HITACHI CONST. MACHINERY CO LTD, Tsuchiura-shi, Ibaraki 3000013 (JP); MATSUDA, Fujio, HITACHI CONST. MACHINERY CO LTD, Tsuchiura-shi, Ibaraki 3000013 (JP); ADACHI, Hiroyuki, HITACHI CONST. MACHINERY CO LTD, Tsuchiura-shi, Ibaraki 3000013 (JP); INOSE, Satoshi, HITACHI CONST. MACHINERY CO LTD, Tsuchiura-shi, Ibaraki 3000013 (JP); KONDOU, Itsuo, HITACHI CONST. MACHINERY CO LTD, Tsuchiura-shi, Ibaraki 3000013 (JP)
(74) Representative: van Loon, C.J.J.
(86) International application number: PCT/JP2005/023240
(87) International publication number: WO 2006/068076

(57) **Abstract**

A rental management system that includes a mobile terminal device and a server wirelessly connected with the mobile terminal device, includes: a rental item code input means disposed at the mobile terminal device for entering an inherent rental item identification code assigned to each rental item; a database disposed at the server, in which rental information to be used when renting out the rental item is stored; a control means disposed at the server for reading out the rental information to be used when renting out the rental item from the database based upon a command wirelessly received from the mobile terminal device; a decision-making means disposed either at the mobile terminal device or at the server for making a decision as to whether or not the rental item is available for rent based upon the rental item identification code assigned to the rental item having been entered by the rental item code input means, and the rental information having been read out by the control means; and a notifying means disposed at the mobile terminal device for notifying results of the decision made by the decision-making means.

## Description

### TECHNICAL FIELD

The present invention relates to a rental management system through which renting of rental item is managed.

### BACKGROUND ART

There is a system known in the related art that uses computers in the management of rental item such as construction vehicles owned by a rental company by keeping track of rental statuses, reservation statuses, maintenance statuses and the like of the rental item (see patent reference 1). In this system, the rental statuses and the reservation statuses of the construction vehicles are registered in a database and the registered information is made available to individual branches at their computer terminals via an in-house network so as to enable the branches to take reservations or rent out rental item.

Patent Reference 1: International Publication No. WO 2002/011007

### DISCLOSURE OF THE INVENTION

### PROBLEMS TO BE SOLVED BY THE INVENTION

When a given type of rental item is to be rented out, a staff member at the rental company must visit warehouse to verify the availability of the particular type of rental item. However, since the warehouse houses numerous units of a given type of rental item, the staff member is not able to quickly determine which units are available for rent. In other words, the task of verification is bound to be rather complicated.

### MEANS FOR SOLVING THE PROBLEMS

According to the 1st aspect of the present invention, a rental management system that includes a mobile terminal device and a server wirelessly connected with the mobile terminal device, comprises: a rental item code input means disposed at the mobile terminal device for entering an inherent rental item identification code assigned to each rental item; a database disposed at the server, in which rental information to be used when renting out the rental item is stored; a control means disposed at the server for reading out the rental information to be used when renting out the rental item from the database based upon a command wirelessly received from the mobile terminal device; a decision-making means disposed either at the mobile terminal device or at the server for making a decision as to whether or not the rental item is available for rent based upon the rental item identification code assigned to the rental item having been entered by the rental item code input means, and the rental information having been read out by the control means; and a notifying means disposed at the mobile terminal device for notifying results of the decision made by the decision-making means.
According to the 2nd aspect of the present invention, in the rental management system according to the 1st aspect, it is preferred that the rental item code input means includes a reading means for reading the inherent identification code attached to the rental item.
According to the 3rd aspect of the present invention, in the rental management system according to the 1st or the 2nd aspect, it is preferred that: information on a substitute for the rental item is also stored in the database; the control means reads out and provides the information on the substitute for the rental item stored in the database; and if the decision-making means determines that the rental item is not available for rent, the notifying means displays at a display means at the mobile terminal device the information on the substitute which is provided by the control means.
According to the 4th aspect of the present invention, in the rental management system according to any one of the 1st through 3rd aspects, it is preferred that: information on an attachment item that can be mounted at the rental item is also stored in the database means; the control means reads out and provides the information on the attachment item that can be mounted at the rental item stored in the database means; and as the rental item identification code of the rental item and an identification code assigned to an attachment item to be mounted at the rental item are entered by the rental item code input means, the decision-making means makes a decision as to whether or not the attachment item can be mounted at the rental item based upon the information on the attachment item that can be mounted at the rental item, which is provided by the control means.
According to the 5th aspect of the present invention, in the rental management system according to any one of the 1st through 4th aspects, it is preferred that: the mobile terminal device further includes a customer information input means for entering rental customer information on a rental customer; reservation information on a rental item reservation saving been placed by the rental customer is stored in advance in the database means; the control means reads out from the database means and provides the reservation information on the rental item reservation having been placed by the rental customer, corresponding to rental customer information entered by the customer information input means; and the decision-making means makes a decision as to whether or not a rental item assigned with the rental item identification code having been entered by the rental item identification code input means is a rental item having been reserved by the rental customer, based upon the rental item identification code entered by the rental item code input means and the reservation information on the rental item reservation having been placed by the rental customer corresponding to the rental customer information entered by the customer information input means, which is provided by the control means.
According to the 6th aspect of the present invention, in the rental management system according to the 3rd aspect, it is preferred that: information related to a rental period during which the rental item is to be rented out to another customer is stored in the database means as the rental information to be used when renting out the rental item; and the decision-making means determines that the rental item is not available for rent if a requested rental period for the rental item overlaps the rental period during which the rental item is to be rented out to the other customer.
According to the 7th aspect of the present invention, in the rental management system according to the 3rd aspect, it is preferred that: information related to maintenance work scheduled for the rental item is stored in the database means as the rental information to be used when renting out the rental item; and the decision-making means determines that the rental item is not available for rent if a requested rental period for the rental item starts before the maintenance work on the rental item ends.
According to the 8th aspect of the present invention, a mobile terminal device is one used in a rental management system according to any one of the 1st through 7th aspects.
According to the 9th aspect of the present invention, a mobile terminal device constituting part of a rental management system, comprises: a rental item code input means for entering an inherent rental item identification code assigned to each rental item; a receiving means for receiving rental information to be used when renting out the rental item from a server wirelessly connected with the mobile terminal device; a decision-making means for making a decision as to whether or not the rental item is available for rent based upon the rental item identification code assigned to the rental item entered by the rental item code input means and the rental information having been received; and a notifying means for notifying results of the decision made by the decision-making means.
According to the 10th aspect of the present invention, a program executed at a mobile terminal device constituting part of a rental management system, comprises: a step of making a decision as to whether or not an inherent rental item identification code assigned to a rental item has been entered; a step of transmitting the entered rental item identification code to a server wirelessly connected; a step of receiving rental item information stored in advance at the server and corresponding to the rental item identification code, from the server; a step of making a decision as to whether or not the rental item is available for rent based upon the rental item identification code of the rental item having been entered and the information having been received from the server; and a step of notifying results of the decision via a notifying device at the mobile terminal device.

### ADVANTAGEOUS EFFECT OF THE INVENTION

According to the present invention, based upon the identification code inherent to an actual unit of rental item input to a mobile terminal device and the rental item information read out by the server, a decision is made as to whether or not the particular rental item is available for rent and the decision-making results are reported via the mobile terminal device. Thus, the availability of the unit for rent can be ascertained instantly, which assures highly efficient rental of the rental item.

### BRIEF DESCRIPTION OF THE DRAWINGS

(FIG. 1) A schematic diagram illustrating the structure adopted in the rental management system achieved in a first embodiment of the present invention
(FIG. 2) The structure of the mobile terminal shown in FIG. 1
(FIG. 3) The structure of the rental management server shown in FIG. 1
(FIG. 4) An example of the customer management database shown in FIG. 3
(FIG. 5) An example of the reservation management database shown in FIG. 3
(FIG. 6) An example of the rental item management database shown in FIG. 3
(FIG. 7) A flowchart of the rental reservation procedure executed in the first embodiment
(FIG. 8) An example showing how the reservation management database may be updated at the time of a rental reservation
(FIG. 9) An example showing how the rental item management database may be updated at the time of a rental reservation
(FIG. 10) A flowchart of an example of processing that may be executed in the arithmetic operation unit at the mobile terminal in the first embodiment
(FIG. 11) An example showing how the rental item management database may be updated at the time of a rental item dispatch
(FIG. 12) A flowchart of an example of processing that may be executed in the arithmetic operation unit at the mobile terminal in a second embodiment
(FIG. 13) A schematic diagram illustrating the structure adopted in the rental management system achieved in a third embodiment of the present invention
(FIG. 14) A flowchart of an example of processing that may be executed in the arithmetic operation unit at the mobile terminal in the third embodiment
(FIG. 15) A variation of FIG. 7

### BEST MODE FOR CARRYING OUT THE INVENTION

### -First Embodiment-

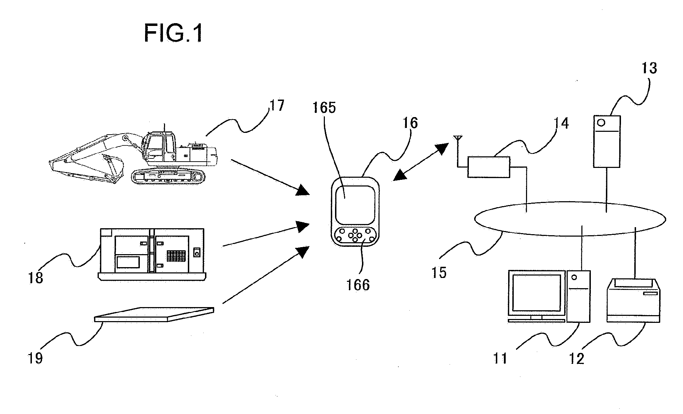

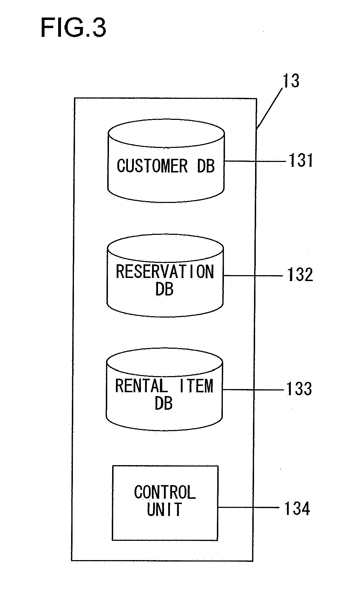

The following is an explanation of the first embodiment of the rental management system according to the present invention, given in reference to FIGS. 1 through 11.

FIG. 1 schematically illustrates the structure adopted in the rental management system achieved in the first embodiment. A computer terminal 11 that executes processing such as taking rental reservations; inventory verification and the like and a printer 12 that outputs the results of the processing executed at the computer terminal 11 are installed in each branch of a rental company. The computer terminals 11 are each connected to a rental management server 13 via a network 15 such as an in-house LAN. Information provided by the server 13 can be obtained at a mobile (portable) terminal (PDA) 16 via a wireless device 14 as well as at the computer terminals 11. The network 15 may be achieved by using the Internet.

In the first embodiment, the rental management system is adopted in dispatch management of rental item used in construction work. Construction work rental item rental is usually managed in correspondence to individual construction sites and a plurality of types of rental items are often rented out in a batch to a given construction site. For instance, the figure shows a hydraulic excavator 17, an electric generator 18 and a metal plate 19 as the rental item to be rented out. These rental items 17 - 19 are stored in a rental item storage room, such as a warehouse at the branch, where different types of rental items are systematically sorted and grouped according to rental item type. An RFID tag (wireless IC tag) is attached to each of the rental items 17 - 19, and an inherent ID number (rental item ID) to be used as an ID code is assigned to the RFID tag. It is to be noted that a bar code instead of an RFID tag may be used and an ID number may be directly stamped onto each rental item 17 - 19.

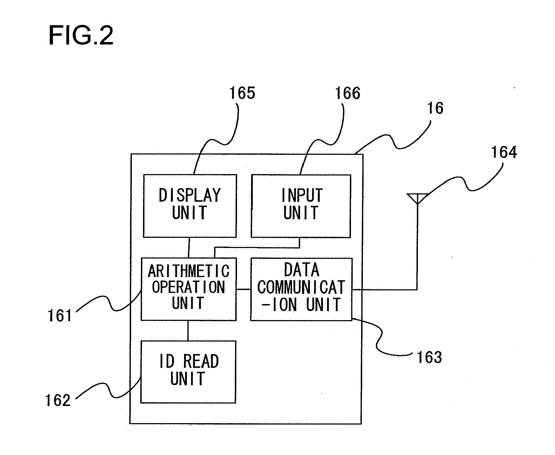

FIG. 2 shows the structure of the mobile terminal 16. The mobile terminal 16 comprises an arithmetic operation unit 161, an ID read unit 162 that reads rental item IDs from rental item RFID tags, a data communication unit 163 engaged in communication with the server 13 via an antenna 164, a display unit 165 at which the results of the arithmetic operation executed by the arithmetic operation unit 161 are displayed and an input unit 166 through which various commands are input through switch operations or the like. Commands may be entered through the display unit 165 constituted with a touch panel. The arithmetic operation unit 161 executes processing related to the dispatch management as described in detail later.

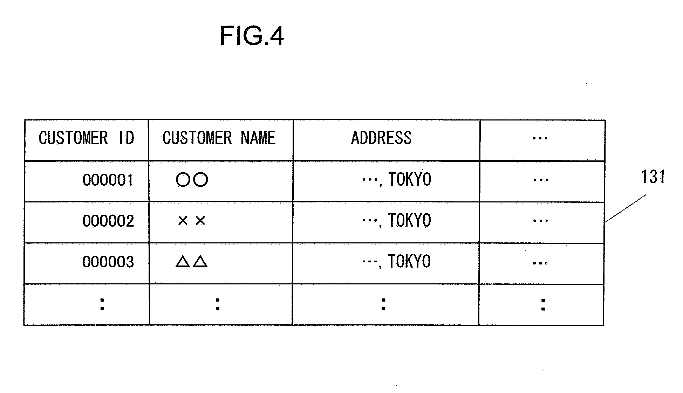

The rental management server 13 comprises a customer management database 131 at which information on rental customers is managed, a reservation management database 132 at which rental reservations are managed, a rental item management database 133 at which rental information and maintenance information on each rental item are managed, and a control unit 134 that controls data read/write and the like at each database. The control unit 134 executes control under which data (information) to be written into the individual databases and various signals are received and control under which data (information) having been read out from the individual databases are transmitted. Examples of data that may be held (stored) in the individual databases 131 ~ 133 are respectively presented in FIGS. 4 through 6.

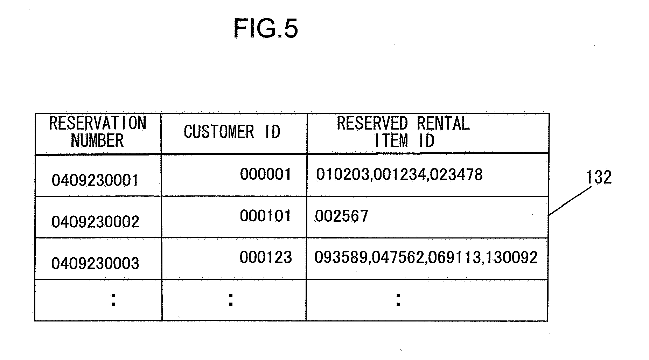

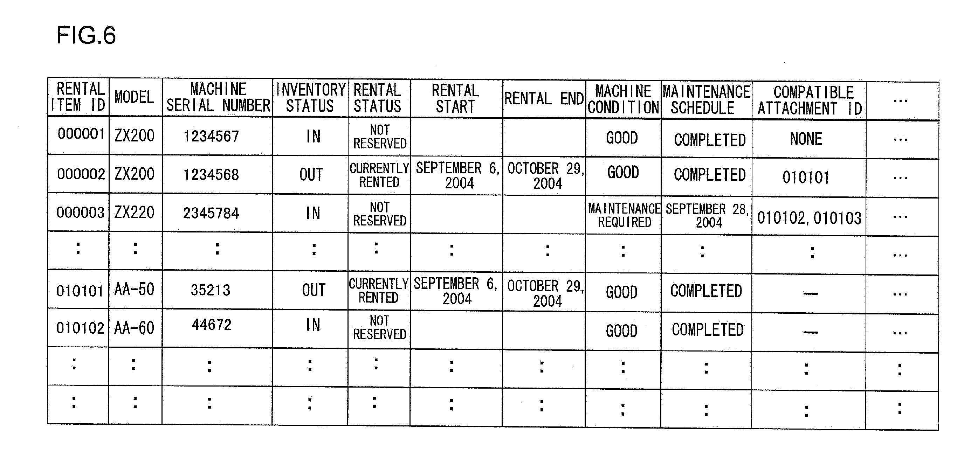

As shown in FIG. 4, customer ID numbers (customer IDs), and the customers' names, addresses and the like are stored in the customer management database 131. As shown in FIG. 5, reservation numbers, the corresponding customer IDs and the ID numbers (reserved rental item IDs) assigned to the reserved rental items are stored in the reservation management database 132. As shown in FIG. 6, the ID numbers assigned to each rental item registered at the individual branches are stored in the rental item management database 133. In addition, in correspondence to each rental item, the model name, the unit serial number, the current inventory status, the rental status, the rental start date, the rental end date, the machine condition, the maintenance schedule, the ID number (compatible attachment ID) assigned to an attachment that can be mounted at the particular rental item and the like. It is to be noted that information indicating a substitute with similar specifications and similar capabilities to those of a given rental item, too, are stored in the rental item management database 133.

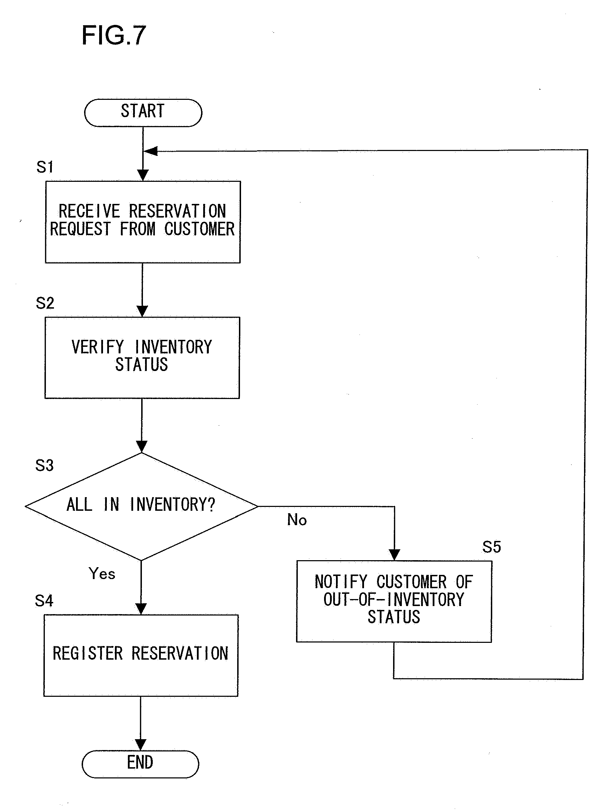

FIG. 7 presents a flowchart of the rental reservation procedure followed at each branch. First, a rental reservation request from a customer indicating an type of rental item to be rented, the rental period and the like is received via telephone, fax, electronic mail or the like in step S1. Then, in step S2, the server 13 is accessed via the computer terminal 11 to verify the availability of the item requested for rent, the current rental status, whether or not it can be rented out over the requested rental period and the like. At this time, the inventory statuses at other branches, as well as the inventory status at the branch where the reservation request has been taken, are verified so as to determine whether or not the particular item can be dispatched from another branch.

In step S3, a decision is made as to whether or not all the rental items that the customer wishes to rent will be available for rent over the requested rental period. If the rental company does not own any of the requested items or if any of the requested items is not available for rent over the requested rental period due to an earlier booking, the customer is notified of the unavailability in step S5 and then, the operation returns to the start of the processing to check whether or not the reservation contents are to be modified. If, on the other hand, all the rental items are available for rent over the requested rental period, the reservation is accepted and registered at the server 13 in step S4. In response, the databases 131 ~ 133 are updated.

The following is an explanation of how the data in the databases 131 - 133 are updated given in reference to a specific update example. For instance, data are updated as follows when a registered customer (assigned with the customer ID 000003 in FIG. 4) has requested a rental reservation for a work machine ZX 220 (assigned with the rental item ID 000003 in FIG. 6) and an attachment AA-60 (assigned with the rental item ID 010102 in FIG. 6). First, upon receiving the rental reservation request from the customer, a verification is made to ascertain whether or not the particular types of rental items are in inventory (in stock), whether or not they are currently rented out and the like (step S2). In this example, both the work machine ZX 220 and the attachment AA-60 are in inventory and neither is scheduled for rental, as shown in FIG. 6. In addition, while the work machine is scheduled to undergo maintenance, the maintenance work will have been completedbefore the requested rental start date (e.g., October 4). Since all the requested rental items are available for rent, the reservation is accepted (step S4).

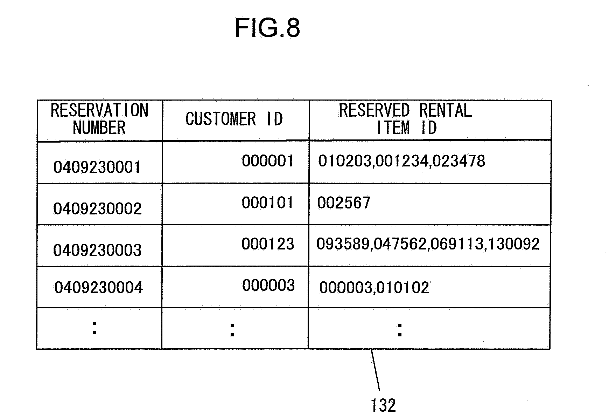

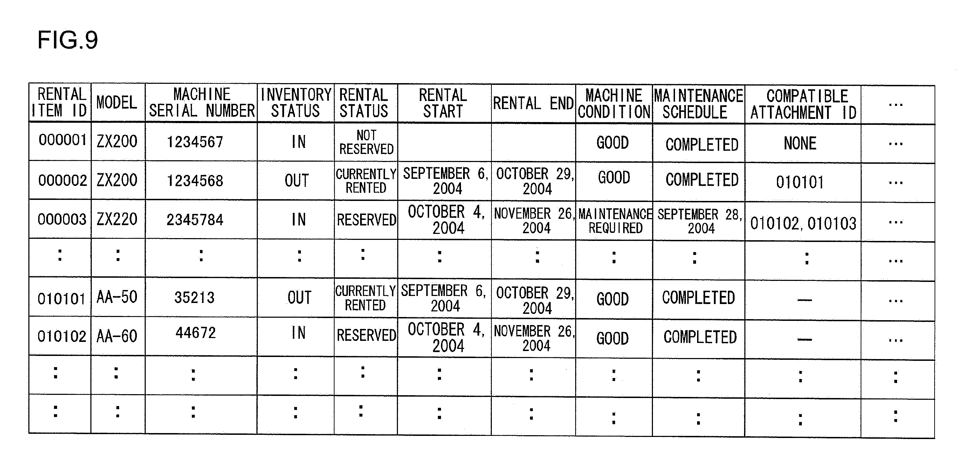

As a result, the reservation management database 132 is updated as shown in FIG. 8 and the rental item management database 133 is updated as shown in FIG. 9. Namely, a new reservation number (0409230004) is registered as shown in FIG. 8, and the rental statuses for the work machine ZX 220 and the attachment AA-60 are updated from "not reserved" to "reserved" with the dates indicating the "rental start" and the "rental end" for these units also updated as shown in FIG. 9. It is to be noted that if a rental reservation from a new customer has been accepted, the customer management database 131, too, is updated.

In the embodiment, a staff member at the rental company performs a dispatch verification by exchanging data with the server 13 via the mobile terminal 16 when rental item is actually dispatched for rental. The following is an explanation of this dispatch verification.

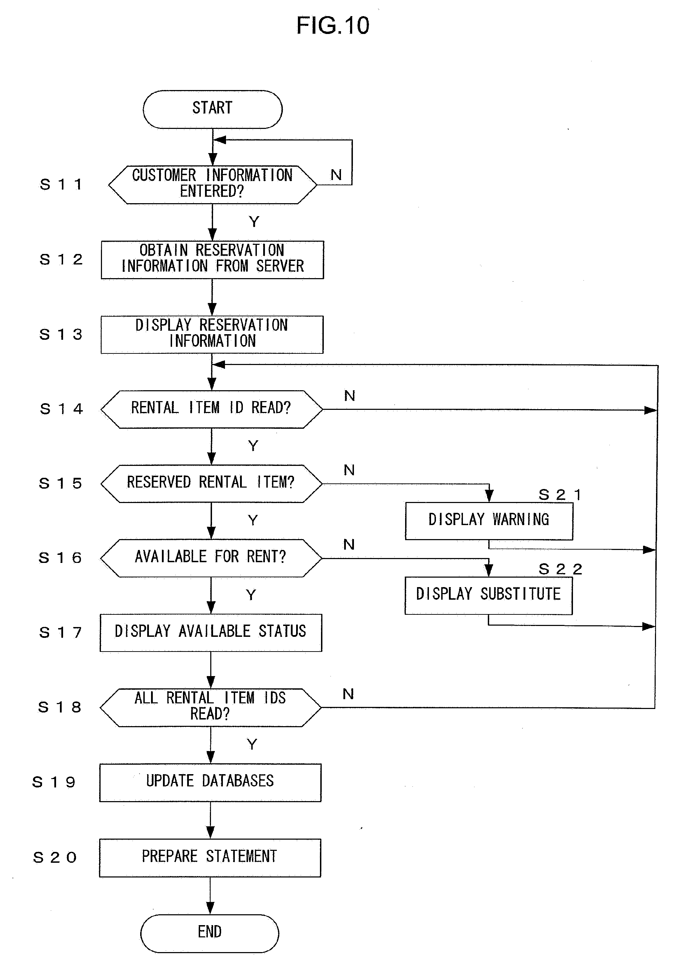

FIG. 10 presents a flowchart of the processing executed by the arithmetic operation unit 161 of the mobile terminal 16 in conformance to a dispatch management program in the first embodiment. It is to be noted that the dispatch management program is preinstalled in the mobile terminal 16.

First, a decision is made in step S11 as to whether or not customer information has been input at the mobile terminal 16. The customer information, which is information used to identify a specific customer such as the customer ID, the customer's telephone number, the customer's name or the like, is input to the mobile terminal 16 by operating the input unit 166. If an affirmative decision is made in step S11, the operation proceeds to step S12 to transmit the customer information from the data communication unit 163 to the server 13 via the antenna 164 and the wireless device 14, obtain the reservation information (the information shown in FIGS. 8 and 9) corresponding to the customer information from the databases 132 and 133 and store the reservation information thus obtained into an internal memory. Next, in step S13, part of the information having been obtained from the databases 132 and 133, e.g., information indicating the model names, the machine serial numbers and the like, is displayed at the display unit 165.

In step S14, a decision is made as to whether or not a staff member at the rental company goes to the warehouse and a rental item ID has been obtained from the RFID tag attached to a rental item, i.e., whether or not a rental item ID has been read by the ID read unit 162. If an affirmative decision is made in step S14, the operation proceeds to step S15 to make a decision as to whether or not the rental item IDs having been obtained in step S12 include the rental item ID having just been read, i.e., whether or not the rental item ID belongs to a reserved rental item. If a negative decision is made in step S15, the operation proceeds to step S21 to display a warning at the display unit 165 and then the operation returns to step S14. Thus, the staff member is able to correctly ascertain whether or not the particular rental item is reserved and the wrong rental item is never rented out by mistake.

If an affirmative decision is made in step S15, the operation proceeds to step S16 to make a decision as to whether or not the rental item is available for rent. If the rental item is still undergoing maintenance or it has already been reserved by another customer for rental, it is not available for rent and accordingly, a negative decision is made in step S16. In other words, if scheduled maintenance on the particular item will not have been completed by the requested rental start date, if the rental period requested by the customer overlaps the scheduled maintenance or the requested rental period overlaps another rental period booked by another customer, it is judged that the particular rental item is not available for rent.

If a negative decision is made in step S16, the operation proceeds to step S22 to obtain information on a possible substitute for the rental item from the database 133 and display the model name, the machine serial number and the like of the substitute at the display unit 165 before the operation returns to step S14. It is to be noted that after making a negative decision in step S16, a message indicating that the item is not available for rent may be displayed at the display unit 165 and a decision as to whether or not the customer is requesting a substitute may be made by checking whether or not a specific operation has been performed at the input unit 166. In this case, the operation may proceed to step S22 only if the customer is requesting a substitute.

If, on the other hand, an affirmative decision is made in step S16, the operation proceeds to step S17 to display a message indicating that the particular rental item is available for rent. If a plurality of types of rental items have been requested for rent, a decision is made in step S18 as to whether or not the equipment IDs assigned to all the rental items have been read by the ID read unit 162. If a negative decision is made in step S18, the operation returns to step S14 to repeatedly execute similar processing. If an affirmative decision is made in step S18, the operation proceeds to step S19 to transmit an update command for updating the databases 131 - 133 to the server 13 from the data communication unit 163 via the antenna 164 and the wireless device 14. In response to the command, the databases 131 ~ 133 are updated.

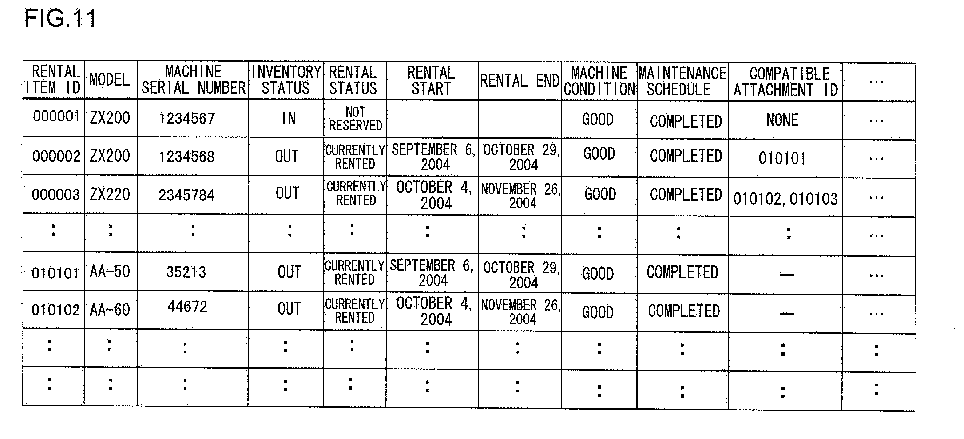

If the work machine ZX 220 and the attachment AA-60, for instance, are to be rented out, the data in the rental item management database 133, such as those shown in FIG. 9, are updated to the data contents shown in FIG. 11 as explained earlier. Namely, the inventory statuses for the work machine ZX 220 and the attachment AA-60 are both updated from "in" to "out" and their rental statuses are also updated from "reserved" to "rented". It is to be noted that after executing the processing in step S18, a list of all the rental items to be rented out may be brought up on display at the display unit 165 to allow the staff member to verify whether or not all the rental items on the list are actually to be rented out and then the operation may proceed to step S19 in response to a specific operation performed at the input unit 166. Namely, a verification screen may be brought up on display at the display unit 165 before the contents of the database 133 are updated. In step S20, an itemized statement preparation command is transmitted to the printer 12 from the data communication unit 163 via the antenna 164 and the wireless device 14.

Next, the operation executed when dispatching the reserved rental items 17 - 19 (see FIG. 1) having been reserved in advance for rent is explained. First, the staff member at the rental company operates the terminal computer 11 in order to verify the rental reservation status. While viewing the screen at the terminal computer 11, he enters the customer information (e.g., the customer ID) at the mobile terminal 16. Thus, the reservation information obtained from the server 13 is brought up on display at the display unit 165 of the mobile terminal 16 (step S13). In this example, the model names, the machine serial numbers and the like of the hydraulic excavator 17, the electric generator 18 and the metal plate 19 are displayed at the display unit 165.

By checking the display, the staff member verifies the specific rental items to be dispatched and takes the mobile terminal 16 to the warehouse where the rental items 17 - 19 are stored. At the warehouse, he reads the rental item IDs from the RFID tags attached to the individual rental items 17 - 19 via the ID read unit 162. If the ID of any of the actual rental items read with the ID read unit 162 does not match any of the IDs obtained from the server 13, a warning is displayed at the display unit 165 (step S21). This allows the staff member to accurately ascertain whether or not the rental items are the reserved rental items 17 ~ 19 with ease and thus, the wrong rental item is never rented out by mistake. Namely, since there is no need for the staff member to go back to the office and check the rental information on the rental items 17 - 19 at the computer terminal 11 after checking the IDs of the rental items 17 - 19 at the warehouse, the staff member does not need to travel between the warehouse and the office frequently for rental item dispatch and thus, the dispatch management can be executed more efficiently.

Even when the rental items 17 - 19 are present at the warehouse, they may still be undergoing maintenance work or they may already be reserved by another customer. Under such circumstances, the particular rental items among the rental items 17 - 19 should not be rented out and, accordingly, a suggested substitute is indicated at the display unit 165 (step S22). The staff member checks the indicated substitute, inputs the rental item ID of the substitute and makes a verification as to whether or not the substitute is available for rent in a manner similar to that described earlier. Thus, the staff member is able to check the substitute without having to first go back to the office and operate the computer terminal 11 in the office and, as a result, the rental check-out operation can be performed more efficiently. Once the operation described above ends, the database 133 at the server 13 is automatically updated (step S19). Since the need for the staff member to input the dispatch information from the computer terminal 11 in the office is eliminated, the dispatch operation can be more easily performed.

The following advantages are achieved in the first embodiment.
(1) The rental item IDs of the rental items having been booked for rent in advance are obtained at the mobile terminal 16 from the server 13, the actual rental item ID of each rental item is input to the mobile terminal 16 via the ID read unit 162 and the warning is displayed at the display unit 165 if the information obtained from the server 13 and the rental item ID read via the ID read unit do not match. Since this eliminates the risk of renting out the wrong rental item, dispatch management can be executed with better ease and accuracy.
(2) Since the ID assigned to the actual rental item and the rental item ID obtained from the server 13 are checked against each other at the mobile terminal 16, the staff member is able to determine whether or not the item is available for rent by checking the actual rental item personally. Since this eliminates the need to perform the task of going back to the office after checking the rental item availability to verify the rental information, the rental item can be rented out with great efficiency. While a plurality of types of rental items are rented out in a batch to, for instance, a construction site, the different types of rental items may not always be stored together in a single area inside the warehouse and are quite likely to be stored in separate areas. For this reason, this feature is particularly advantageous since it allows the staff member to determine the availability for rent without having to travel back and forth between the warehouse and the office.

(3) Since a suggested substitute is indicated (step S22) if the requested rental item is still undergoing maintenance work or has already been booked by another customer, a search for available substitutes can be conducted at the rental item storage site, which makes it possible to offer a substitute with ease.
(4) Once the rental item IDs assigned to all the rental items available for rent are input, the database 133 is updated (step S19) in response to a command issued from the mobile terminal 16. Thus, the database 133 is updated accurately and promptly based upon the actual rental item dispatch statuses.
(5) Since an itemized statement is issued via the printer 12 (step S20) after the database 133 is updated, an accurate statement can be issued promptly based upon the actual rental item dispatch statuses.

### -Second Embodiment-

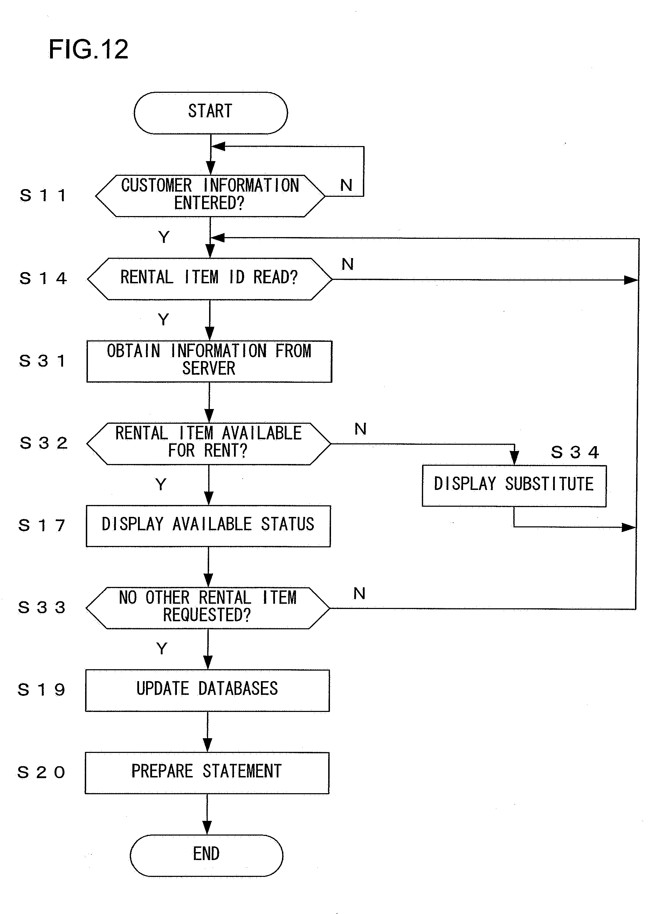

In reference to FIG. 12, the second embodiment of the rental management system according to the present invention is explained.
While an explanation has been given in reference to the first embodiment on the premise that rental item is booked in advance for rent, customers may not always rent rental item by booking it in advance and a customer may drop into a branch without advance notice to rent rental item on the spot. The second embodiment has been achieved by taking into consideration such a possibility. It is to be noted that the following explanation focuses on differences from the first embodiment.

The second embodiment differs from the first embodiment in the processing executed by the arithmetic operation unit 161 at the mobile terminal 16. FIG. 12 presents a flowchart of the processing executed by the arithmetic operation unit 161 at the mobile terminal 16 in the second embodiment. It is to be noted that the same step numbers are assigned to steps in which processing identical to that in FIG. 10 is executed.

First, a decision is made in step S11 as to whether or not customer information has been input at the mobile terminal 16. If an affirmative decision is made in step S11, a decision is made in step S14 as to whether or not in the rental item ID has been read from an RFID tag. If an affirmative decision is made in step S14, the operation proceeds to step S31 to obtain rental information, maintenance information, substitute information and the like with regard to the particular rental item from the server 13 (from the rental item management database 133). Next, a decision is made in step S32 as to whether or not the rental item is available for rent. If the rental item has already been booked to be rented out during the requested rental period or if the rental item needs to undergo maintenance during the requested rental period, it cannot be rented out and, accordingly, a negative decision is made in step S32. Upon making a negative decision in step S32, the operation proceeds to step S34 to indicate a substitute at the display unit 165.

If, on the other hand, an affirmative decision is made in step S32, the operation proceeds to step S17 to display a message indicating that the rental item is available for rent. Next, in step S33, a decision is made as to whether or not there is any other rental item that the customer has requested for rent. This decision may be made by checking, for instance, whether or not a specific command has been input through an operation of the input unit 166. If a negative decision is made in step 533, the operation returns to step S14 to repeatedly execute similar processing. Upon making an affirmative decision in step S33, a command for updating the database 133 is issued in step S19 and then an itemized statement preparation command is transmitted in step S20 before ending the processing.

When renting out rental item to a customer visiting the branch without an advance reservation, the customer information is first input at the mobile terminal 16 in the second embodiment. Then, the staff member visits the warehouse together with the customer to directly check the rental item to be rented out. If a rental item requested for rent is in the warehouse, the rental item ID at the RFID tag of the rental item is input to the mobile terminal 16. In response, information indicating whether or not the particular rental item is available for rent is brought up on display, enabling the staff member to determine on the spot whether or not the rental item can be rented out. If it is decided that the item is not available for rent, a substitute is indicated at the display unit 165 (step S34). If the customer wishes to accept the substitute, the staff member enters the rental item ID assigned to the substitute. After all the rental items to be rented out are determined as described above, the input unit 166 is operated to issue a command for updating the database 133 and a command for preparing an itemized statement.

As described above, the rental item ID is input to the mobile terminal 16 by the staff member personally checking the actual rental item, the rental information and the like corresponding to the particular rental items is obtained from the server 13 and a decision as to whether or not the item is available for rent is made in the second embodiment. Thus, even when a customer visits the branch without an advance reservation, the branch staff member is able to promptly check whether or not rental item stored within the warehouse is available for rent without having to travel back and forth between the warehouse and the office. In addition, if any item is unavailable for rent, the availability of a substitute can be ascertained with ease.

### -Third Embodiment-

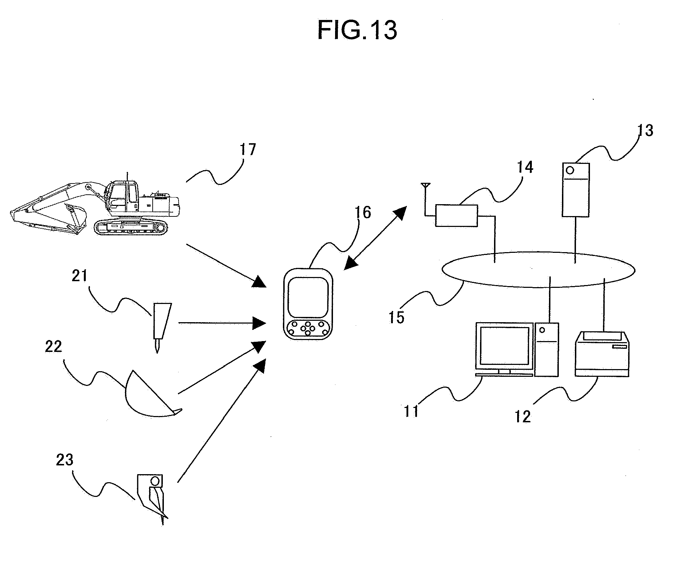

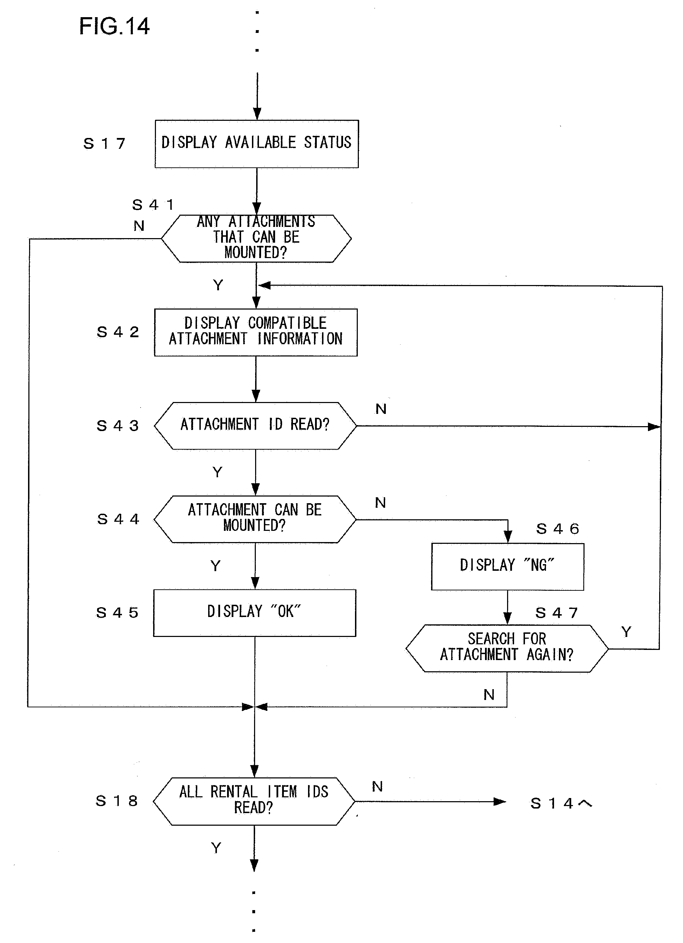

In reference to FIGS. 13 and 14, the third embodiment of the rental management system according to the present invention is explained.
A work machine such as a hydraulic excavator is operated at a work site by mounting a specific attachment unit (hereafter referred to as an attachment) among the various attachments at the work machine in correspondence to the nature of the operation. For instance, a bucket is mounted when the work machine is to be engaged in a digging operation, whereas a breaker is mounted at the work machine when it is to be engaged in a crushing operation. However, only specific types of attachments can be mounted at a given hydraulic excavator. In the third embodiment, a decision is made when renting out an attachment as to whether or not the particular attachment can be mounted at the work machine body. It is to be noted that the following explanation focuses on differences from the first embodiment.

FIG. 13 schematically illustrates the structure adopted in the rental management system achieved in the third embodiment. It is to be noted that the same reference numerals are assigned to components identical to those in FIG. 1 and the following explanation focuses on differences from the configuration shown in FIG. 1. FIG. 13 shows rental items which include a hydraulic excavator 17 and attachments (a breaker 21, a bucket 22, a grapple 23, etc.) that can be mounted at the hydraulic excavator 17. An RFID tag affixed with a rental item ID to be used to identify the rental item is attached to each of the rental items 17 and 21 through 23. The following is an explanation of an operation executed when the hydraulic excavator 17 alone has been reserved in advance for rent but the attachments 21 through 23, too, must be rented out although they have not been reserved. It is assumed that the hydraulic excavator 17 has been reserved for rental through a procedure identical to that shown in FIG. 7.

The third embodiment differs from the first embodiment in the processing executed by the arithmetic operation unit 161 at the mobile terminal 16. FIG. 14 presents a flowchart of part of the processing executed by the arithmetic operation unit 161 at the mobile terminal 16 in the third embodiment. It is to be noted that the same step numbers are assigned to steps in which processing identical to that in FIG. 10 is executed and that the following explanation focuses on differences from the processing in FIG. 10.

As shown in FIG. 14, additional steps S41 ~ S47 are executed between step S17 and step S18 in the third embodiment. Namely, as the rental item ID of the reserved base machine (the hydraulic excavator 17) is read via the ID read unit 162 and the rental item ID matches the rental item ID obtained from the server 13, information indicating that the particular rental item 17 is available for rent is brought up on display at the display unit 165 in step S17. Next, the operation proceeds to step S41 to make a decision based upon the information indicating compatible attachment IDs stored in the database 133 as to whether or not any attachment can be mounted at the base machine. If an affirmative decision is made in step S41, the operation proceeds to step S42, whereas if a negative decision is made in step S41, the operation proceeds to step S18. In step S42, information (the model name, the machine serial number, etc.) of an attachment (the breaker 21, the bucket 22, the grapple 23, or the like) that can be mounted at the base machine is brought up on display at the display unit 165.

Next, a decision is made in step S43 as to whether or not the rental item ID assigned to the specific attachment among the attachments 21 - 23 has been read via the ID read unit 162. If an affirmative decision is made in step S43, the operation proceeds to step S44 to make a decision as to whether or not the attachment can be actually mounted at the base machine. At this time, a negative decision is made in step S44 if the selected attachment does not match the attachment indicated in the display having been brought up in step S42. In addition, if the particular attachment has already been booked by another customer or is still undergoing maintenance work, it cannot be rented out and, accordingly, a negative decision is made in step 544.

The operation proceeds to step S45 upon making an affirmative decision in step S44, whereas the operation proceeds to step S46 if a negative decision is made in step S44. In step 545, "OK" is displayed at the display unit 165, whereas in step S46, "NG" is displayed at the display unit 165. As a result, the rental company staff member is able to ascertain promptly whether or not the attachment can be mounted at the base machine and whether or not the attachment is available for rent. In step S47, a decision is made as to whether or not an attachment search is to be executed again. If an affirmative decision is made in step S47, the operation returns to step S42, whereas if a negative decision is made in step S47, the operation proceeds to step S18.

As described above, when both the hydraulic excavator 17 and the attachments 21 - 23 are both to be rented out, the rental item ID assigned to the hydraulic excavator 17 is read at the mobile terminal 16, the information on the attachments 21~23 that can be mounted at the particular hydraulic excavator 17 is obtained from the server 13 and the obtained information is brought up on display at the display unit 165 (step S42) in the third embodiment. This makes it possible to promptly ascertain the specific types of attachments that can be mounted on the hydraulic excavator 17. In addition, the rental item IDs of the attachments 21 - 23 are read at the mobile terminal 16 and "NG" is brought up on display if any of the selected attachments cannot be actually mounted at the hydraulic excavator 17 or cannot be rented out (step S46). Thus, the wrong attachment is never rented out to the customer, which ultimately enables optimal rental of available equipment.

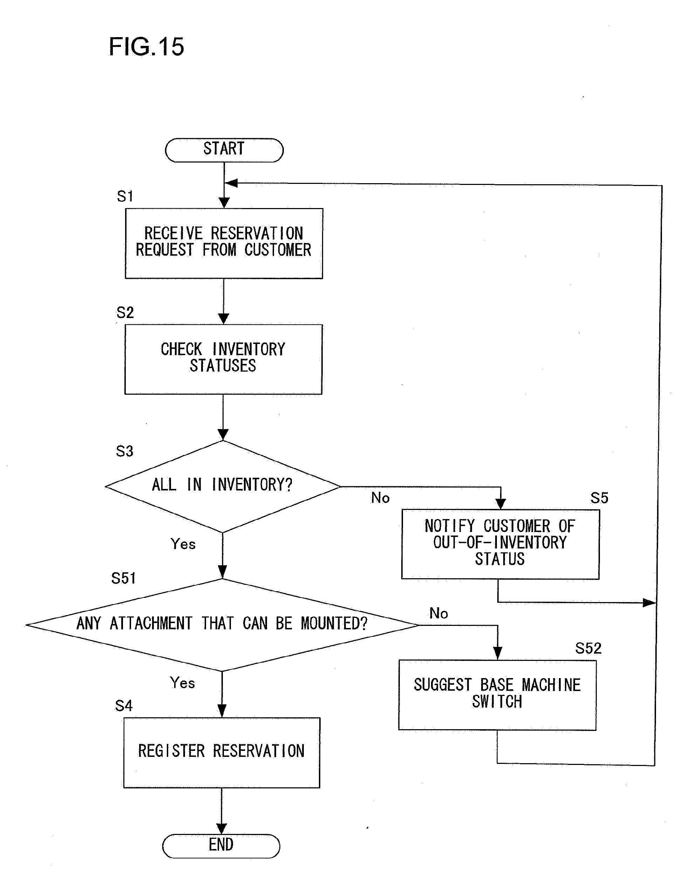

It is to be noted that the operation should be executed as explained below if both the work machine itself and the attachments have been reserved in advance. FIG. 15 shows the rental reservation procedure executed at the branch in this situation. The same step numbers are assigned to steps identical to those in FIG. 7. In step S1, the reservation request for the base machine and the attachments from the customer is taken and in step S2, their inventory statuses are checked. If they are all currently in inventory, the operation proceeds from step S3 to step S51 to make a decision based upon the information provided from the database 133 as to whether or not the attachments can be mounted at the particular base machine. If an affirmative decision is made in step S51, the operation proceeds to step S4 to register the reservation. If, on the other hand, a negative decision is made in step S51, the operation proceeds to step S52 to suggest an alternative base machine compatible with the attachments. In this procedure, a verification is made as to whether or not the attachments can be mounted at the base machine during the reservation stage, and accordingly, when actually renting the attachments out, the staff member simply needs to verify that the attachments are the ones that have been booked by using the mobile terminal 16 as in the first embodiment.

A customer who already owns the base machine may wish to rent only the attachments. Under such circumstances, the information on the base machine owned by the customer should be obtained when the reservation request from the customer is received in step S1 and a decision as to whether or not compatible attachments are available should be made. Information needed when making this decision, such as the operating hydraulic pressure, the maximum pressure and the attachment connector diameter, may be obtained by checking a catalog.

It is to be noted that the processing executed by the arithmetic operation unit 161 is not limited to that shown in FIGS. 10, 12 and 14 explained earlier, as long as a decision as to whether or not a specific rental item is available for rent is made by comparing the rental item ID directly obtained from the rental item stored at the rental item storage site with the information stored in the databases 131 through 133 and read out by the server 13 and the decision-making results are indicated via the mobile terminal 16. For instance, while the decision as to whether or not the item is available for rent is made by the arithmetic operation unit 161 at the mobile terminal 16, the server 13 may instead function as the decision-making means. Namely, the mobile terminal 16 may be used exclusively to input the rental item ID and indicate the results of the decision-making executed by the server 13 and all the other processing may be delegated to the server 13. In addition, while a substitute is searched and the search results are displayed at the display unit 165 if a given rental item cannot be rented out, the rental management system does not need to include a search means.

While the ID number is entered at the mobile terminal 16 as the identification code inherent to each rental item, alphabetical characters or symbols may instead be used as the identification code. While the rental item ID is input via the ID read unit 162, another rental item ID input means may be utilized. For instance, the mobile terminal may include a bar code reader.

While the mobile terminal 16 is equipped with a communication means constituted with the data communication unit 163, the antenna 164 and the like, a mobile (portable) telephone may be utilized as a mobile terminal device. In addition, the information used to provide rental item rental services is stored in the databases 131 - 133, other types of information such as rental fees may also be stored in a database. While the notifying means is constituted with the display unit 165 and the arithmetic operation unit 161 and the information indicating whether or not a rental item is available for rent is displayed at the display unit 165 of the mobile terminal 16, this information may be provided as an audio message or the like, as well. Furthermore, while the customer information related to the customer having placed a reservation order is input at the mobile terminal 16 through an operation of the input unit 166 (step S11), the customer information input means may adopt a structure other than this.

While an explanation is given above in reference to the embodiments on an example in which construction equipment is rented out to be used at a construction site, the present invention may be adopted equally effectively in conjunction with car rental services and the like.

An explanation is given above in reference to the embodiments by assuming that the dispatch management program is preinstalled in the mobile terminal 16. However, the dispatch management program may be provided to the mobile terminal 16 via a recording medium such as a memory card 30. In addition, the dispatch management program recorded in a database at the server 13 may be downloaded from the server 13 via the wireless device 14. As an alternative, the dispatch management program may be downloaded to the mobile terminal 16 directly connected with the server 13 via an interface cable (not shown). As a further alternative, the mobile terminal 16 may be connected to the Internet so as to download the program via the Internet.

The dispatch management program can be provided via the wireless device 14 or the Internet by converting it to a signal on an electric communication line, i.e., a transmission medium through which a carrier wave transmits and then transmitting this signal.

As explained above, the dispatch management program can be distributed as a computer-readable computer programproduct adopting any of various modes including a recording medium and a carrier wave. It is to be noted that in addition to the dispatch management program, the programs executed at the server 13 and the computer terminal 11 can be distributed as a computer-readable computer program product adopting any of various modes such as a recording medium (e.g., a CD-ROM) and a carrier wave.

While the invention has been particularly shown and described with respect to preferred embodiments and variations thereof by referring to the attached drawings, the present invention is not limited to these examples and it will be understood by those skilled in the art that various changes in form and detail may be made therein without departing from the scope and teaching of the invention.

The disclosure of the following priority application is herein incorporated by reference:
Japanese Patent Application No. 2004-373231 filed December 24, 2004

## Claims

1. A rental management system that includes a mobile terminal device and a server wirelessly connected with the mobile terminal device, comprising:
a rental item code input means disposed at the mobile terminal device for entering an inherent rental item identification code assigned to each rental item;
a database disposed at the server, in which rental information to be used when renting out the rental item is stored;
a control means disposed at the server for reading out the rental information to be used when renting out the rental item from the database based upon a command wirelessly received from the mobile terminal device;
a decision-making means disposed either at the mobile terminal device or at the server for making a decision as to whether or not the rental item is available for rent based upon the rental item identification code assigned to the rental item having been entered by the rental item code input means, and the rental information having been read out by the control means; and
a notifying means disposed at the mobile terminal device for notifying results of the decision made by the decision-making means.

2. A rental management system according to claim 1, wherein:
the rental item code input means includes a reading means for reading the inherent identification code attached to the rental item.

3. A rental management system according to claim 1 or claim 2, wherein:
information on a substitute for the rental item is also stored in the database;
the control means reads out and provides the information on the substitute for the rental item stored in the database; and
if the decision-making means determines that the rental item is not available for rent, the notifying means displays at a displaymeans at the mobile terminal device the information on the substitute which is provided by the control means.

4. A rental management system according to any one of claims 1 through 3, wherein:
information on an attachment item that can be mounted at the rental item is also stored in the database means;
the control means reads out and provides the information on the attachment item that can be mounted at the rental item stored in the database means; and
as the rental item identification code of the rental item and an identification code assigned to an attachment item to be mounted at the rental item are entered by the rental item code input means, the decision-making means makes a decision as to whether or not the attachment item can be mounted at the rental item based upon the information on the attachment item that can be mounted at the rental item, which is provided by the control means.

5. A rental management system according to any one of claims 1 through 4, wherein:
the mobile terminal device further includes a customer information input means for entering rental customer information on a rental customer;
reservation information on a rental item reservation having been placed by the rental customer is stored in advance in the database means;
the control means reads out from the database means and provides the reservation information on the rental item reservation having been placed by the rental customer, corresponding to rental customer information entered by the customer information input means; and
the decision-making means makes a decision as to whether or not a rental item assigned with the rental item identification code having been entered by the rental item identification code input means is a rental item having been reserved by the rental customer, based upon the rental item identification code entered by the rental item code input means and the reservation information on the rental item reservation having been placed by the rental customer corresponding to the rental customer information entered by the customer information input means, which is provided by the control means.

6. A rental management system according to claim 3, wherein:
information related to a rental period during which the rental item is to be rented out to another customer is stored in the database means as the rental information to be used when renting out the rental item; and
the decision-making means determines that the rental item is not available for rent if a requested rental period for the rental item overlaps the rental period during which the rental item is to be rented out to the other customer.

7. A rental management system according to claim 3, wherein:
information related to maintenance work scheduled for the rental item is stored in the database means as the rental information to be used when renting out the rental item; and
the decision-making means determines that the rental item is not available for rent if a requested rental period for the rental item starts before the maintenance work on the rental item ends.

8. A mobile terminal device used in a rental management system according to any one of claims 1 through 7.

9. A mobile terminal device constituting part of a rental management system, comprising:
a rental item code input means for entering an inherent rental item identification code assigned to each rental item;
a receiving means for receiving rental information to be used when renting out the rental item from a server wirelessly connected with the mobile terminal device;
a decision-making means for making a decision as to whether or not the rental item is available for rent based upon the rental item identification code assigned to the rental item entered by the rental item code input means and the rental information having been received; and
a notifying means for notifying results of the decision made by the decision-making means.

10. A program executed at a mobile terminal device constituting part of a rental management system, comprising:
a step of making a decision as to whether or not an inherent rental item identification code assigned to a rental item has been entered;
a step of transmitting the entered rental item identification code to a server wirelessly connected;
a step of receiving rental item information stored in advance at the server and corresponding to the rental item identification code, from the server;
a step of making a decision as to whether or not the rental item is available for rent based upon the rental item identification code of the rental item having been entered and the information having been received from the server; and
a step of notifying results of the decision via a notifying device at the mobile terminal device.

## Amended claims

### Amended claims under Art. 19.1 PCT

**1.** (amended)
A rental management system that includes a mobile terminal device and a server wirelessly connected with the mobile terminal device, comprising:
a rental item assigned with an inherent rental item identification code, which is stored at a rental item storage site;
a rental item code input means disposed at the mobile terminal device for entering the rental item identification code assigned to the rental item stored at the rental item storage site;
a database disposed at the server, in which information used when dispatching rental items is stored;
a control means disposed at the server for reading out the information from the database based upon a command wirelessly received from the mobile terminal device;
a decision-makingmeans disposed at the server for making a decision as to whether or not the rental item with the identification code having been entered is available for dispatch based upon the rental item identification code having been entered by the rental item.code input means and the information having been read out by the control means; and
the notifying means disposed at the mobile terminal device for receiving and notifying results of the decision made by the decision-making means.

**2.** A rental management system according to claim 1, wherein:
the rental item code input means includes a reading means for reading the inherent identification code attached to the rental item.

**3.** (amended)
A rental management system according to claim 1 or claim 2, wherein:
information on a substitute for a rental item is also stored in the database;
the control means reads out and provides the information on the substitute for the rental item assigned with the rental item identification code having been entered, stored in the database; and
if the decision-making means determines that the rental item assigned with the rental item identification code having been entered is not available for dispatch, the notifying means displays at a display means at the mobile terminal device the information on the substitute which is provided by the control means.

**4.** (amended)
A rental management system according to any one of claims 1 through 3, wherein:
information on an attachment item that can be mounted at the rental item is also stored in the database means;
the control means reads out and provides the information on the attachment item that can be mounted at the rental item assigned with the rental item identification code having been entered, stored in the database means; and
as the rental item identification code of the rental item and an identification code assigned to an attachment item to be mounted at the rental item are entered by the rental item code input means, the decision-making means makes a decision as to whether or not the attachment item assigned with the identification code of the attachment item having been entered can be mounted at the rental item assigned with the rental item identification code having been entered based upon the information on the attachment item that can be mounted at the rental item assigned with the rental item identification code having been entered, which is provided by the control means.

**5.** A rental management system according to any one of claims 1 through 4, wherein:
the mobile terminal device further includes a customer information input means for entering rental customer information on a rental customer;
reservation information on a rental item reservation having been placed by the rental customer is stored in advance in the database means;
the control means reads out from the database means and provides the reservation information on the rental item reservation having been placed by the rental customer, corresponding to rental customer information entered by the customer information input means; and
the decision-making means makes a decision as to whether or not a rental item assigned with the rental item identification code having been entered by the rental item identification code input means is a rental item having been reserved by the rental customer, based upon the rental item identification code entered by the rental item code input means and the reservation information on the rental item reservation having been placed by the rental customer corresponding to the rental customer information entered by the customer information input means, which is provided by the control means.

**6.** (amended)
A rental management system according to claim 3, wherein:
information related to a rental period during which the rental item is to be rented out to another customer is stored in the database means as the rental information used when dispatching the rental item; and
the decision-making means determines that the rental item assigned with the rental item identification code having been entered is not available for rent if a requested rental period for the rental item assigned with the rental item identification code having been entered overlaps the rental period during which the rental item assigned with the rental item identification code having been entered is to be rented out to the other customer.

**7.** (amended)
A rental management system according to claim 3, wherein:
information related to maintenance work scheduled for the rental item is stored in the database means as the rental information to be used when dispatching the rental item; and
the decision-making means determines that the rental item assigned with the rental item identification code having been entered is not available for rent if a requested rental period for the rental item assigned with the rental item identification code having been entered starts before the maintenance work on the rental item assigned with the rental item identification code having been entered ends.

**8.** A mobile terminal device used in a rental management system according to any one of claims 1 through 7.

**9.** (amended)
A mobile terminal device constituting part of a rental management system, comprising:
a rental item code input means for entering an inherent rental item identification code assigned to each rental item;
a receiving means for receiving rental information to be used when dispatching the rental item from a server wirelessly connected with the mobile terminal device;
a decision-making means for making a decision as to whether or not the rental item is available for dispatch based upon the rental item identification code assigned to the rental item entered by the rental item code input means and the rental information having been received; and
a notifying means for notifying results of the decision made by the decision-making means.

**10.** (amended)
A program executed at a mobile terminal device constituting part of a rental management system, comprising:
a step of making a decision as to whether or not an inherent rental item identification code assigned to a rental item has been entered;
a step of transmitting the entered rental item identification code to a server wirelessly connected;
a step of receiving rental item information stored in advance at the server and corresponding to the rental item identification code, from the server;
a step of making a decision as to whether or not the rental item is available for dispatch based upon the rental item identification code of the rental item having been entered and the information having been received from the server; and
a step of notifying results of the decision via a notifying device at the mobile terminal device.
